# EUROPEAN PATENT APPLICATION

(11) **EP 2 236 044 A1**
(43) Date of publication of application: **06.10.2010**
(21) Application number: 10003414.9
(22) Date of filing: 30.03.2010
(51) Int. Cl.: A23L 1/31, A23L 1/314, A23L 1/317

(54) **Method of preparing a filling for snacks**

(30) Priority: 31.03.2009 NL 1036795
(71) Applicant: Lenssen, Jozef Robert Simon Julius, 6281 AC Mechelen (NL); Heuvellandfood, 6281 AC Mechelen (NL)
(72) Inventor: Lenssen, Jozef, Robert, Simon, Julius, 6281 AC Mechelen (NL)
(74) Representative: Renkema, Jaap

(57) **Abstract**

The present Invention relates to a method of preparing a filling for snacks, comprising marinating meat, onions and bay-leaf in a mixture of water and vinegar; adding syrup, boiling the mixture obtained until the meat is done; separating the solid and liquid components; preparing a roux; preparing a salpicon by finishing the roux with a bouillon; and mixing the solid component obtained before. The invention furthermore relates to a filling for snacks and to the snacks made with it.

## Description

The present invention relates to a method of preparing a filling for snacks, especially "kroketten" and "bitterballen" (hereinafter called cylindrical and ball-shaped croquettes), as well as to snacks containing the filling prepared by the method, especially cylindrical and ball-shaped croquettes.

Fillings for cylindrical and ball-shaped croquettes are well-known, inter alia from NL 8802663. This patent document relates to cylindrical and/or ball-shaped croquettes, in which the fat content has been highly lowered by fully or partly giving up the application of fat in roux preparation. Furthermore, in NL 8802663 It has been described that a water-based premix can be made without the occurrence of lumping and yet a smooth, glossy, lump-free ragout be prepared.

Well-known fillings for cylindrical and ball-shaped croquettes comprise a salpicon. A salpicon usually consists of a bouillon thickened with a roux and therein small pieces of cut meat or fish, whether or not mixed with cut vegetables.

A roux mostly consists of butter and flour e.g. in a proportion of 5:6 or 2:3 by weight. After mixing of melted butter and flour In a pan on the stove, the roux is briefly baked while being stirred continuously in order to eliminate the taste of flour. A roux is prepared in a thick-bottomed pan because the roux has to be cooked properly, so that the thickening power is maximized. Depending on the duration that the roux is made to bake, it gets more or less coloured. A roux can be converted into a sauce by dilution with e.g. milk, meat juice or a bouillon. When little liquid is added, the sauce remains thick, It is then called a ragout. For the preparation of snacks, especially cylindrical and ball-shaped croquettes, a high ragout consistency is required to make further processing possible.

It is also known that croquette fillings may be seasoned to taste with e.g. goulash spices or satay spices by which the variants called goulash croquette and satay croquette may be prepared. The number of variants to be prepared In this way is limited.

The present invention relates to a method of preparing a filling for snacks, especially cylindrical and ball-shaped croquettes, based on a "zuurvlees" (sour-meat) recipe.

"Zuurvlees" (hereinafter called sour meat) is a Limburg regional dish, which is made from meat, e.g. pork, beef, rabbit and preferably horse meat, marinated in vinegar, and finally sweetened to taste by adding e.g. syrup and/or ginger cake and/or sugar. Sour meat prepared In a traditional way is unsuitable for direct incorporation in cylindrical and/or ball-shaped croquettes, because it does not have the right consistency for that purpose.

Moreover it is impossible to equal the taste of sour meat by seasoning the salpicon with spices and/or other additives in the way described above.

The object of the present invention is to provide a method of preparing a filling for snacks, especially cylindrical and ball-shaped croquettes, on the basis of a sour-meat recipe.

This object is achieved by means of the method according to the present invention, comprising the following steps:
1. marinating a first mixture of meat and onions In a second mixture of water and vinegar containing bay-leaf;
2. adding syrup;
3. boiling the mixture obtained until the meat is done;
4. separating the solid and liquid components;
5. preparing a roux through the [sub]steps of:
   a. melting butter;
   b. adding flour;
   c. allowing the flour to be cooked well;
6. preparing a salpicon by finishing the roux obtained in step 5 with a bouillon; and
7. mixing the solid component obtained in step 4 with the salpicon obtained in step 6.

The meat and the onions are preferably coarsely diced and marinated at a ratio by mass of e.g. 10 parts meat to 1 part onions or 8 parts meat to 1 part onions, preferably 5 parts meat to 1 part onions. The marinate comprises 1-10 parts by volume vinegar (e.g. organic vinegar), 1-20 parts by volume water, one or a few bay-leaves and, optionally, other additives, e.g. pepper, salt, clove, red wine, etc. The marinate comprises preferably 3-5 parts by volume vinegar and 7-8 parts by volume water. Here, 0.2-2 litres of marinate per kilogram of meat, preferably 0.6-1.4 litres of marinate per kilogram of meat, is used. The meat and the onions are marinated for at least 1 h, e.g. at least 12 h and preferably at least 36 h.

Subsequently 5-35, preferably 15-25, percent by weight syrup, calculated In relation to the amount of meat, is added. The syrup is selected from the non-exhaustive group comprising apple syrup, pear syrup, date syrup, cane-sugar syrup, fruit syrup, citrus syrup, maple syrup, banana syrup, apple/cinnamon syrup, sugar beet syrup or any combination of them, preferably from the [sub]group comprising apple syrup, date syrup and cane-sugar cane syrup. At the same time 1-10, preferably 1.1-6 percent by weight sugar can be added, again calculated in relation to the amount of meat. The [type of] sugar is selected from the non-exhaustive group comprising brown granulated sugar, cane sugar, soft brown sugar; preferably, brown granulated sugar is used.

The mixture obtained is then cooked until the meat is well done, that means until the meat disintegrates into thread-like pieces.

Separating solid components from liquid components can proceed In numerous ways e.g. by decanting. The simplest method of separation is nevertheless sieving. Both the liquid component and the solid component are kept for further use in the method of preparation according to the present invention.

A roux is made as usual from e.g. 1 part by mass butter and 1 to 2 parts flour by mass, preferably from 1 part butter by mass and 1.3-1.7 parts by weight flour. In all, 20-80, preferably 30-60, percent by weight roux, calculated in relation to the amount of meat, is used.

A salpicon is subsequently by diluting the present roux with some liquid. This may be bouillon, water, wine, milk, cream or a combination of them, but, preferably, the liquid component obtained before (i.e, cooking liquid containing marinate, syrup and sugar) is used. This enhances the particular taste of the traditional sour-meat in the filling prepared ultimately for snacks. The mixture is boiled while stirring until a salpicon of a high consistency is obtained.

Finally, the previously obtained solid component (meat, onions and any solid additives) is added to the salpicon in such a way that the eventual filling contains 15-40, e.g. 20-35, preferably 25-32, percent by weight meat, calculated in relation to the overall filling weight. Furthermore, the filling contains 1.5-8 percent by weight onions, calculated in relation to the overall filling weight. If necessary, undesired solid components, such as bay-leaves, are removed first.

Optionally, the whole may further be seasoned to taste with one or more spices (e.g. pepper, salt, clove) or other additives (e.g. "kruldkoek, peperkoek and ontbljtkoek" (i.e. spicy gingerbread, ginger cake and the like)) during or at the end of the preparation process (i.e. in each of the method's steps). Optionally, one or more additives such as binders, preservatives, flavour enhancers can be added during and after the preparation process. Next to the preparation, the filling is cooled down to preferably about 4°C,

The filling has arrived at the right consistency for application as a filling for snacks, especially cylindrical and ball-shaped croquettes. For that purpose the filling is shaped into a cylinder or ball, coated with egg white and then breaded, preferably, with coarse-grain breadcrumbs.

Cylindrical croquettes have typically a length of 9-11 cm and a diameter of 2.5-4 cm and contain about 70-80 cc of filling. Spherical croquettes have a typical diameter of 3-5 cm. The snacks will keep well when cooled to about 4°C for 48 h, when frozen at about -6°C for 1 week, at -12°C for 1 month and at -18°C for a few months up to one year; they get ready by means of deep frying in fat or oil heated to about 180°C for 2-8, preferably 3-5, minutes.

The invention also relates to a sour-meat filling for snacks comprising 15-40 percent by weight, e.g. 20-35 percent by weight and preferably 25-32 percent by weight meat; 1.5-8 percent by weight onions; bay-leaf and syrup, for which the percentages by weight have been calculated in relation to the overall sour-meat filling weight. The sour-meat filling contains e.g. 5-35 percent by weight, preferably 15-25 percent by weight syrup, calculated in relation to the amount of meat. The sour-meat filling contains a syrup selected from the non-exhaustive group comprising apple syrup, pear syrup, date syrup, (cane) sugar syrup, fruit syrup, citrus syrup, maple syrup, banana syrup, apple/cinnamon syrup, sugar-beet syrup or a combination of them, preferably from the group containing apple syrup, date syrup and sugar cane syrup. The sour-meat filling may also contain 1-10 percent by weight, preferably 1.1-6 percent by weight sugar, for example brown granulated sugar, cane sugar, soft brown sugar and preferably brown granulated sugar, again calculated in relation to the amount of meat. The sour-meat filling incorporates pork, beef, rabbit and preferably horse meat. The sour-meat filling is further seasoned to taste with one or more spices selected from the group containing pepper, salt and clove and/or one or more other additives selected from the group containing "kruidkoek, peperkoek and ontbijtkoek" (i.e. spicy ginger-bread, ginger cake and the like), Furthermore, the filling may contain additives such as binders, preservatives and flavour enhancers.

The invention also relates to snacks, preferably cylindrical croquettes and/or ball-shaped croquettes, containing a filling as described above or a filling prepared according to the method described.

The invention also relates to croquettes containing a sour-meat filling, the sour-meat filling comprising 15-40 percent by weight meat, 1.5-8 percent by weight onions; 0.75-14 percent by weight syrup, wherein the percentages by weight have been calculated In relation to the overall sour-meat filling weight and wherein the meat and the onions are marinated for at least 12 h in 0.2-2 litres of marinate per kilogram of meat and wherein the marinate comprises 1-10 parts by volume vinegar, 1-20 parts by volume water and one or a few bay-leaves.

The invention will be further explained with reference to the following examples:

### Example 1

1.5 kilogram of pork, 1 bay-leaf, 200 g of coarse brunoise cut (diced) onions, 3 parts organic vinegar and 7 parts water were mixed and marinated for 12 h, whereupon the bay-leaf was removed. Subsequently, 300 g of date syrup and 20 g of brown granulated sugar were added to the whole. This mixture was bolled until the meat was done. The solid part was separated from the liquid part by sieving. The liquid part was cooled down.

In the usual way, a roux was made from 200 g of butter and 300 g of (patent) flour. The liquid part of the above mixture was then added to the roux while being stirred and brought to the boil until a solid salpicon (a kind of thick ragout) was obtained.

Finally, the meat (thready meat) was mixed with the salpicon, seasoned with pepper and salt, and cooled down to about 4°C.

### Example 2

1 kilogram of beef or horse meat, 2 bay-leaves, 200 g of coarse brunoise cut onions, 5 parts organic vinegar and 8 parts water were mixed and marinated for 36 h. Subsequently, 200 g of sugar cane syrup and 60 g of brown granulated sugar were added to the whole. This mixture, including the bay-leaves, was bolled. After the meat had been cooked properly, the solid part was separated from the liquid part by sieving. The liquid was cooled down.

While being stirred, the liquid was added to a roux prepared according to example 1 and brought to the boil until a solid salpicon had been obtained.

Finally, the meat ("thready meat") was mixed with the salpicon, seasoned to taste with pepper and salt, and cooled down to about 4°C

### Example 3

1 kg of beef or horse meat, 2 bay-leaves, 200 g of coarse brunoise cut onions, 3 parts organic vinegar and 8 parts water were mixed and marinated for 12 h. Subsequently, 200 g of apple syrup and 60 g of brown granulated sugar were added to the whole. The mixture was then boiled, either together with the bay-leaves Inserted in a tea ball or without the bay-leaves, After the meat had been cooked properly, the solid part was separated from the liquid part by sieving. The liquid was cooled down.

While being stirred, the liquid was added to a roux prepared according to example 1 and brought to the boil until a solid salpicon had been obtained.

Finally, the meat (thready meat) was mixed with the salpicon, seasoned to taste with pepper and salt, and cooled down to about 4°C.

## Claims

1. Method of preparing a filling for snacks, comprising the following steps:
1. marinating a first mixture of meat and onions in a second mixture of water and vinegar containing bay-leaf;
2. adding syrup;
3. boiling the mixture obtained until the meat is done,
4. separating the solid components from the liquid components;
5. preparing a roux comprising the steps:
a. melting butter;
b. adding flour;
c. allowing the flour to be cooked well;
6. preparing a salpicon by finishing the roux obtained in step 5 with a bouillon; and
7. mixing the solid component obtained in step 4 with the salpicon obtained in step 6.

2. Method according to claim 1 whereby In step 1 the first mixture of meat and onions for at least 12 h Is marinated In 0.2-2 litres of marinate per kilogram meat and wherein the marinate contains 1-10 parts vinegar by volume, 1-20 parts water by volume and one or a few bay-leaves.

3. Method according to one of the claims 1-2 whereby, in step 2, 5-35 percent by weight syrup and optionally 1-10 percent by weight sugar are added, for which the percentages by weight have been calculated in relation to the amount of meat and for which the syrup Is selected from the group comprising apple syrup, date syrup and sugar-cane syrup.

4. Method according to one of the claims 1-3 whereby the liquid component obtained in step 4 Is used as a bouillon in step 6.

5. Method according to one of the claims 1-4 whereby In step 7 the solid component and the salpicon are mixed in a such proportion that the filling obtained contains 15-40 percent by weight meat and whereby the meat has been selected from the group comprising pork, beef, rabbit and horse meat.

6. Method according to one of the preceding claims whereby the whole is further seasoned to taste with one or more spices selected from the group containing pepper, salt and clove and/or one or more additives selected from the group comprising "kruidkoek, peperkoek and ontbijtkoek" (i.e. spicy gingerbread, ginger cake and the like), during or after one of the method's steps 1-7.

7. Method according to one of the preceding claims whereby in one of the method's steps one or more additives selected from the group comprising binders, preservatives and flavour enhancers are added.

8. Filling for snacks made by a method according to one of the preceding claims.

9. Sour-meat filling comprising 15-40 percent by weight meat, 1.5-8 percent by weight onions; bay-leaf and syrup, for which the percentages by weight have been calculated in relation to the overall sour-meat filling weight, for which the meat has been selected from the group containing pork, beef, rabbit and horse meat.

10. Sour-meat filling according to claim 9, wherein the sour-meat filling contains 5-35 percent by weight of syrup and, optionally, 1-10 percent by weight sugar, for which the percentages by weight have been calculated In relation to the amount of meat and for which the syrup is selected from the group containing apple syrup, date syrup and sugar cane syrup.

11. Sour-meat filling according to one of the claims 9-10 in which the sour-meat filling contains one or more spices selected from the group containing pepper, salt and clove and/or one or more other additives selected from the group containing "kruidkoek, peperkoek and ontbljtkoek" (i.e. spicy gingerbread, ginger cake and the like).

12. Sour-meat filling according to one of the claims 9-11 in which the sour-meat filling contains one or more additives selected from the group containing binders, preservatives and flavour enhancers.

13. Snack containing a filling according to one of the claims 8-12.

14. Snack according to claim 13, in which the snack is a cylindrical or a ball-shaped croquette.

15. Croquette containing a sour-meat filling, the sour-meat filling comprising 16-40 percent by weight meat, 1.5-8 percent by weight onions; 0.75-14 percent by weight syrup, for which the percentages by weight have been calculated In relation to the overall sour-meat filling weight and for which the meat and the onions are marinated for at least 12 h in 0.2-2 litres of marinate per kilogram of meat and In which the marinate comprises 1-10 parts by volume vinegar, 1-20 parts by volume water and one or a few bay-leaves.
